# EUROPEAN PATENT APPLICATION

(11) **EP 1 365 337 A2**
(43) Date of publication of application: **26.11.2003**
(21) Application number: 03009625.9
(22) Date of filing: 29.04.2003
(51) Int. Cl.: G06F 17/60

(54) **Lean inventory management**

(30) Priority: 30.04.2002 US 136847; 31.05.2002 US 159798; 31.05.2002 US 158179; 31.05.2002 US 159599
(71) Applicant: SAP AG, 69190 Walldorf (DE)
(72) Inventor: Heinreichs, Matthias, 67346 Speyer (DE); Seng, Markus, 10437 Berlin (DE); Van Laethem, Pascale, 68775 Ketsch (DE); Heger, Achim, 10555 Berlin (DE)
(74) Representative: Müller-Boré & Partner Patentanwälte

(57) **Abstract**

To allow for an easier data management in an inventory management environment, in particular for updating data or information e.g. relating a stock quantity, an owner or the like, the present invention provides a method, computer program and computer system for managing data items in an inventory management system, comprising:
maintaining a set of data items representing stock items in an inventory, wherein at least one stock item is described by two or more values, each value being expressed in a different unit of measurement;
receiving a change request for a change of one of the values for the stock item;
determining, based on the change request and a defined relationship between the different units of measurement, change quantities for the other values for the stock item; and
updating the two or more values for the stock item based on the change request and the determined change quantities.

## Description

### BACKGROUND

This invention relates to inventory management.

A typical supply chain management (SCM) system involves the management of materials, information, and finances as they move in a process from a supplier to manufacturer to wholesaler to retailer to consumer. A SCM system can be viewed as a process that includes a product flow, an information flow, and a finance flow. The product flow includes the movement of goods from a supplier to a customer, as well as any customer returns or service needs. The information flow involves transmitting orders and updating the status of the delivery. The finance flow involves credit terms, payment schedules, and consignment and title ownership arrangements. All these different types of flows are typically controlled and monitored using some type of computer software.

Typically, SCM software can be divided into two application categories: planning applications and execution applications. Planning applications use advanced algorithms to determine the best means to fill an order. Execution applications track the physical status of goods, the management of materials, and financial information involving the parties.

One example of a software solution for supply chain management is the mySAP Supply Chain Management (mySAP SCM) solution provided by SAP AG of Walldorf, Germany. The mySAP SCM solution is integrated with the mySAP.com e-business platform that also provides functionality for integrating suppliers into the design process, locating the best suppliers, shortening sourcing cycles, providing visibility into the supply chain, and so on.

One important function of SCM systems is to manage stock, for example, keeping stock quantities, recording stock quantity changes resulting from goods movements, and providing information in response to queries about stock quantities and stock movements. In the current mySAP.com e-business solution, most of the functionality relating to Enterprise Resource Planning (ERP), including stock management, is performed by an SAP R/3 software component.

The changing nature of supply chains cause new needs that can not or can only partly be fulfilled by existing solutions, such as the SAP R/3 component. For example, the flow of goods in a global supply chain often includes the participation of several partners working with different SCM systems. In many cases, there is a need for the different partners to retrieve stock information throughout the whole supply chain, which is currently not possible. Another example of new needs relates to logistic service providers, who need to manage physical inventories from different companies in a single warehouse. In existing applications, the underlying structure for stock management functionality is typically linked to the structure of the company owning the stock and can not handle an organization that only temporarily manages the stock (such as a logistics service provider).

There is also an increased need for management of stock quantity data substantially in real time, as supply chains evolve to become more dynamic. Furthermore, some types of stock need to be represented in multiple units of measurement, because certain properties of the goods can change. For example, gasoline increases in volume when the temperature increases while the mass, on the other hand remains constant. Therefore a volume representation only is insufficient. Companies also need the flexibility to add new products, product groups, and so on to their stock management applications.

### SUMMARY

It is an object of the present invention to allow for an easier data management in an inventory management environment, in particular for updating data or information e.g. relating a stock quantity, an owner or the like.

This object is solved according to the invention by the features of the independent claims. Preferred embodiments of the invention are subject of the dependent claims.

In general, in one aspect, this invention provides methods and apparatus or computer system, including computer program products, implementing and using techniques for inventory management. Stock quantity data preferably is maintained. The stock quantity data is updated in response to change requests, and provided in response to data requests. The stock quantity data that is maintained can include handling unit data associated with one or more stock units, one or more quantity types for the stock quantity data, stock owner data, stock operator data representing an operator of a location for storing stock units, stock owner data representing an owner of stock units, and stock location data representing the location of a stock unit associated with the stock quantity data. The stock quantity data can be maintained for one or more external systems, each of which is associated with a separate company, updating the stock independently of updates to other external systems, and updating the stock quantity data in substantially real time.

The stock quantity data can be maintained in a system that includes one or more external computer systems and an inventory management computer coupled to the external computer systems over a network. The inventory management computer can be adapted to perform the stock quantity data operations disclosed above. The system can include external systems, such as a valuation system that processes the stock quantity data in a batch mode. The functionality of the external systems can be included in the inventory management computer. The functionality can include the functionality of at least one of one of a classical inventory management system, a warehouse management system, a finance system, an accounting system, a business information warehouse system, and a handling unit management system. The external systems can include at least one of a classical inventory management system, a warehouse management system, a finance system, an accounting system, a business information warehouse system, and a handling unit management system. The external system can be a valuation system for valuating the stock quantity data.

In another aspect, this invention provides methods and apparatus, including computer program products, implementing and using techniques for updating information relating to an item of stock in a supply chain that resides in a storage facility of a custodian of the stock when the ownership of the item of stock passes from a first owner to a second owner. A first data structure representing the custodian of the item of stock preferably is provided. A second separate data structure representing the owner of the item of stock is provided. The ownership of the item of stock is passed from the first owner to the second owner. Passing the ownership can include changing the name from the first owner to the second owner in a field in the second data structure.

Advantageous implementations can include one or more of the following features. The name of the custodian of the item of stock can be input in a single field in the first data structure. The first owner of the item of stock can be input in a single field in the second data structure. Inputting the name of the first owner of the item of stock can include retrieving the name of the first owner from an XML document. Passing the ownership can include receiving a notification that specifies a change in ownership of the item of stock from the first owner to the second owner. Receiving a notification that specifies a change in ownership can include receiving an XML document. A set of subscriber rules can be provided from an external application. The set of subscriber rules can be applied to a notification of a change in ownership of the stock item to create data. The data can be dispatched to the external application. Providing a set of subscriber rules can include providing a set of subscriber rules of an accounting application and/or a finance application. Providing a set of subscriber rules can further include providing criteria that is relevant to the external application.

In general, in one aspect, this invention provides methods and apparatus, including computer program products, implementing and using techniques for managing data items in an inventory management system. A request to add a data item to the inventory management system preferably is received. The data item has an associated set of attributes to be represented in the inventory management system. It is determined whether the inventory management system includes a structure in which the data item and the set of attributes associated with the data item can be represented. If no structure exists in which the data item and the set of attributes associated with the data item can be represented, a new structure is automatically defined in which the data item and the set of attributes associated with the data item can be represented. The data item and the set of attributes associated with the data item are added to the defined new structure.

Advantageous implementations can include one or more of the following features. The data item can represent a stock item, a handling unit, or a location. The inventory management system can include a hierarchy representing relations between a several data items. Each data item can be represented by a unique identifier in the hierarchy, and unique identifier can be automatically defined for the added data item and the associated set of attributes, a location within the hierarchy can be determined for the added data item, based on one or more of the attributes in the set of attributes associated with the added data item, and the unique identifier can be added to the hierarchy at the determined location. The determining and adding steps can be performed in accordance with a set of rules associated with the hierarchy.

Receiving a request to add a data item can include receiving an XML document defining the data item and the associated set of attributes. One or more external systems can be updated in response to the adding of the data item and the set of attributes associated with the data item to the defined new structure. The structure can be one or more of an index table, a stock table, a serial number table, and a tree hierarchy table. The data item can be represented in a unique index table that includes a global unique identifier field and one or more attribute fields, each attribute field representing an attribute associated with the data item. The tree hierarchy table can be updated every time a unique identifier is created. The index table can be a stock index table, a location index table, or a handling unit index table.

In general, in one aspect, this invention provides methods and apparatus, including computer program products, implementing and using techniques for managing data items in an inventory management system. A set of data items representing stock items is maintained in an inventory, wherein at least one stock item is described by two or more values. Each value can be expressed in different units of measurement. A change request for a change of the values for the stock item that is described in the two or more different units of measurement is received. The two or more values for the stock item that is described in two or more different units of measurement are updated.

Advantageous implementations can include one or more of the following features. A relationship between the different units of measurement can be defined based on a user input. The change request can be performed by any participating party in a supply chain. The change request can include an add operation for increasing values representing a stock item, and a delete operation for reducing values representing a stock item. The change request can be expressed in the two or more units of measurement. The change request can be expressed in only one unit and at least one more unit can be updated based on a relationship between the two different units. A data item can be queried for one or more values of a particular unit for the stock item that is described in the two or more different units of measurement. A first data item can represent a first stock portion owned by a first user and a second data item represents a second stock portion owned by a second user, the first and second stock portions being commingled in a same location.

In various implementations, the invention can provide one or more of the following advantages. Stock quantity data can be maintained in a single database that is centralized relative to external systems. As a result, there is only a single copy of the stock quantity data, which can reduce the time and the need to synchronize data that would otherwise be spread across multiple databases. An external system, such as a SAP system, can update and access stock quantity data in a fast and accurate manner. Near real time information can be kept about which quantities of a physical inventory is stored on which handling unit and at which location. Inventory management functions can be supported along the whole supply chain, from procurement and delivery to consumption, production and sales, shipping, transportation and value-added services (for example, labeling and packing). The inventory management functions include keeping stock quantities, recording the stock quantity changes resulting from goods movements, and answering queries about stock quantities and stock movements.

Stock information can be retrieved throughout the whole supply chain, because stock quantities are visible from various locations in the supply chain (for example, in an external warehouse or on a truck). This is particularly useful for vendor-managed inventories (VMI), where a vendor is responsible for the replenishment of the stock of his customers.

Customers can handle, monitor and manage inventories in several units of quantity simultaneously, where the conversion factors may not be constant. In special cases, such as the oil industry, there are industry and process specific ways of converting the quantities.

Object-oriented techniques for organizing data allow the physical inventory to be represented in a hierarchical inventory structure, that is, a tree-like structure of nodes representing locations, handling units, or stock units. The location nodes contain handling unit nodes, which in turn contain stock unit nodes. When any node in the hierarchy is moved, nodes below the current node are moved automatically, which is useful in a wide range of situations. For example, a logistics service provider can move a container without having knowledge of the actual contents of the container. Stock quantities of a location can easily be moved to another location. A warehouse can easily be outsourced, so that all content of the warehouse changes the operator. Bulk transportation in tanks and compartments can be made possible, even when the contents of the tanks and compartments are owned by several legal entities.

Logistic service providers can manage physical inventories from different companies in the same warehouse, which is not possible with existing storage management applications, since the inventory management typically is related to the structure of a company. A logistics service provider, such as an external warehouse, can manage the same material number for different stock units from different companies in the same location. Changes in company structures, such as merging and outsourcing, are easy to handle, since a stock operator and a stockowner can be treated separately.

Logistics systems and Finance systems can be separated, which is a benefit because finance applications typically deal with periodic information and can accept a certain delay in their data update, while logistics applications need exact quantities at all time and require updates within seconds or fractions of a second (often referred to as "zero latency"). Such a separation is typically not possible in existing inventory management engines, because valuation data is deeply embedded in the applications. When financial data, controlling data, material-ledger data, and so on, are updated for every update of stock quantity data during a goods movement, a performance degradation of the quantity update will result due to the many updates that are necessary. The inventory management system of the invention avoids this problem by dealing with quantities only. The value updates as well as the updates in most subsequent applications can take place periodically in an aggregated form at a later time. Furthermore, stock quantities themselves are kept in one place in LIME, instead of in various components, which often is the case with conventional systems. Therefore, redundant quantity updates during a goods movement can be avoided, as well as complex consistency and repair reports that are needed to ensure that all components are matching.

The inventory management system is based on a flexible data architecture. For example, it can operate in a standalone manner as a sub-component for applications that manage stock quantities, can be integrated with SAP R/3 systems, has clearly defined interfaces so as to cooperate with components such as finance, business information warehouse, classical materials management inventory management (MM-IM) systems as well as with external systems such as warehouse management (WM) systems.

The details of one or more implementations of the invention are set forth in the accompanying drawings and the description below. Other features and advantages of the invention will be apparent from the description and drawings, and from the claims.

### DESCRIPTION OF DRAWINGS

FIG. 1A-C show simplified block diagrams of various implementations of an inventory management system.
FIG. 2 is a schematic diagram of a table structure in one inventory management engine.
FIG. 3 is a stock quantity entity relationship diagram showing the relationship between the tables used in one inventory management engine.
FIG. 4 is a flowchart showing a process in an inventory management system.
FIG. 5 is a schematic diagram showing how to add new entries into the table structure in one inventory management engine.
FIG. 6 is a schematic diagram showing a goods movement in the table structure in one inventory management engine.
FIG. 7 is a schematic diagram showing how to select a particular entry in the table structure in one inventory management engine.
FIG. 8 shows a representation of commingled stock represented in multiple units of measurement at an oil terminal in one implementation of the invention.
FIG. 9 shows an alternative representation of commingled stock represented in multiple units of measurement at an oil terminal in another implementation of the invention.
FIG. 10 is a layout of an example of a warehouse having storage locations and handling units.
FIG. 11 is a flow chart of a process of changing the ownership of a stock item in the warehouse of FIG. 10.

Like reference symbols in the various drawings indicate like elements.

### DETAILED DESCRIPTION

### Overview

The inventory management engine, also referred to as Lean Inventory Management Engine (LIME), works as a service and can be used as a stand-alone component or an add-on component in an existing supply chain management (SCM) system. The inventory management engine preferably does not contain any user interfaces. Therefore, all dialog functions related to the physical stock quantities and stock movements are contained in separate, external components, as will be described below. The primary purpose of the inventory management engine is to keep and move representations of the physical stock and answer queries from other applications about stock quantities and stock movements.

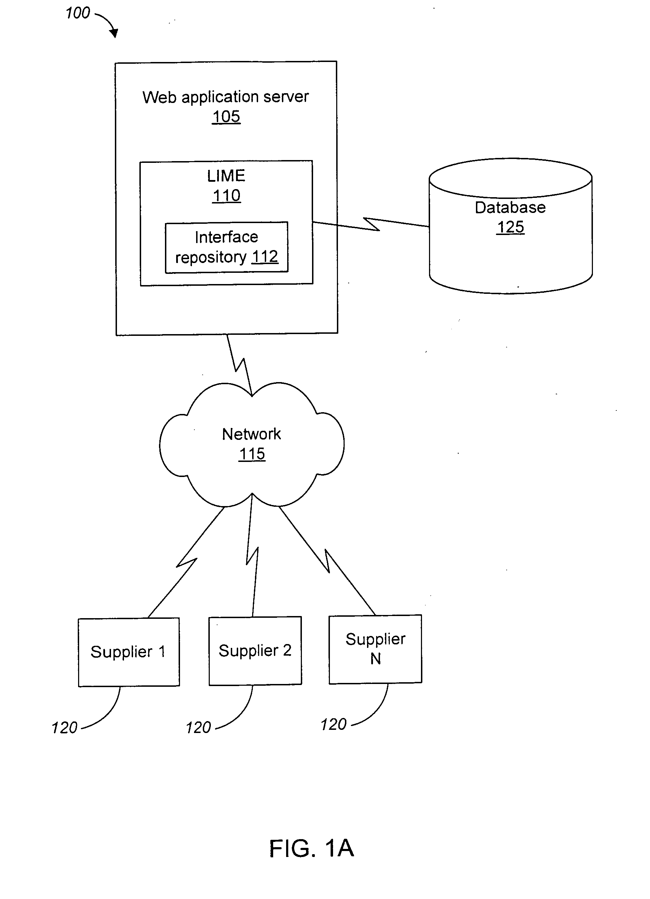

FIG. 1A is a simplified block diagram of one implementation of an inventory management system (100), for example, for a company having a single inventory to manage. The company can be a manufacturing company that receives supplies from N suppliers and operates the inventory management system (100) in a manner that permits each of its suppliers to input data regarding the particular stock items that the supplier supplies to the company. For example, the manufacturing company can have an agreement with the suppliers stating that all finished products in the suppliers' warehouses that will be available to the manufacturing company are to be input into the inventory management system (100), such that the manufacturing company will be able to anticipate shortages of supplies. Individual suppliers can also be authorized to view data in the inventory management system (100) that pertains to levels of the particular stock item the individual suppliers supply. For example, the suppliers may have an arrangement with the company to maintain an inventory range of a particular part at the manufacturer's facility. Thus, viewing the inventory data enables the suppliers to supply stock items as necessary to ensure that the number of stock items at the manufacturer's facility is within the specified range. The suppliers are also able to determine whether they must increase or reduce their production.

The inventory management system (100) includes a web application server (105) that runs an inventory management engine (110) and communicates over a network (115) with the suppliers (120). The web application server (105) communicates with a database (125) that includes inventory-related data. The company operating the web application server (105) can be, for example, a manufacturer of simple and/or complex items. A manufacturer of complex items may receive supplies from many suppliers, whereas the manufacturer of simple items may receive supplies from much fewer suppliers. In either situation the inventory management system operates scaleably to handle the transactions required of the system (100).

The network (115) can be a wired network, such as the Internet, or a wireless network, which can be a one-directional, bidirectional and/or multidirectional network. The inventory management computer (105) can be, for example, a Web-based server computer that includes the inventory management application (110) that uses the database (125) to store stock data, queries, and transaction requests received from the suppliers (120). The inventory management application (110) can be used with any external system and includes an interface that provides a set of interface layers between the queries and transaction requests received from the suppliers and the inventory management application (110). For example, although a user will not interface directly with the LIME inventory management application, the LIME application has a set of interface layers that will interface with external systems thereby allowing a user to query the LIME application and create transactions.

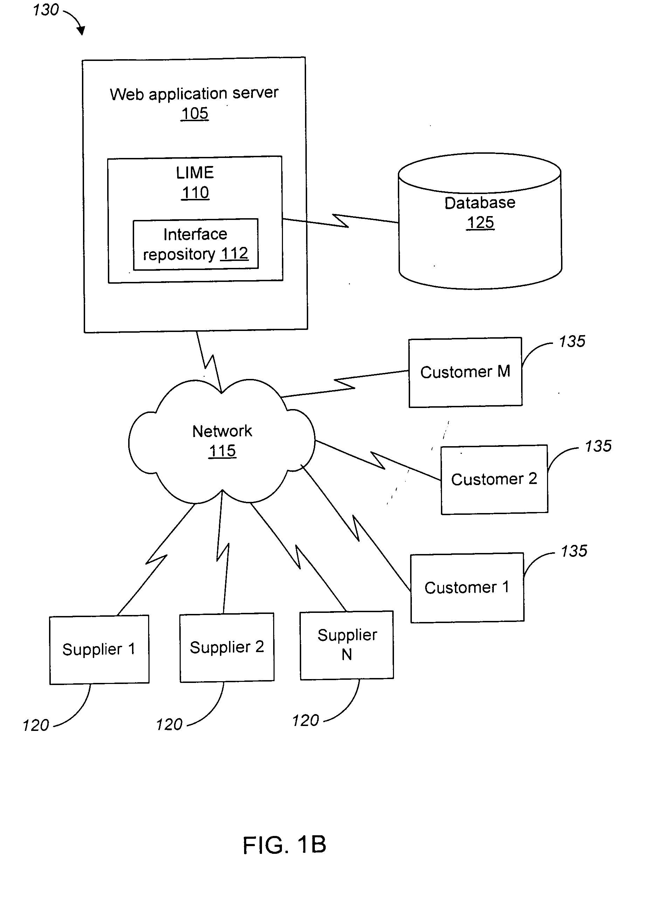

FIG. 1B is a simplified block diagram of an implementation of a second inventory management system (130) in which a company receives stock items from N suppliers (120) and also manufactures and supplies stock items to M customers (135). For example, the customers (135) may be manufacturers of other items. In this implementation, the inventory management system must be able to store the data and handle the queries and transactions of both the N suppliers and the M customers. As may be evident from FIGs. 1A and 1B, each supplier, manufacturer, and customer in a supply chain may have the need to operate an inventory management system (100, 130). Moreover, there may be sharing of some of the data stored in the individual databases (125) between multiple inventory management engines (110) such that the members of the supply chain have as much information as possible to ensure that their inventory management is accurate.

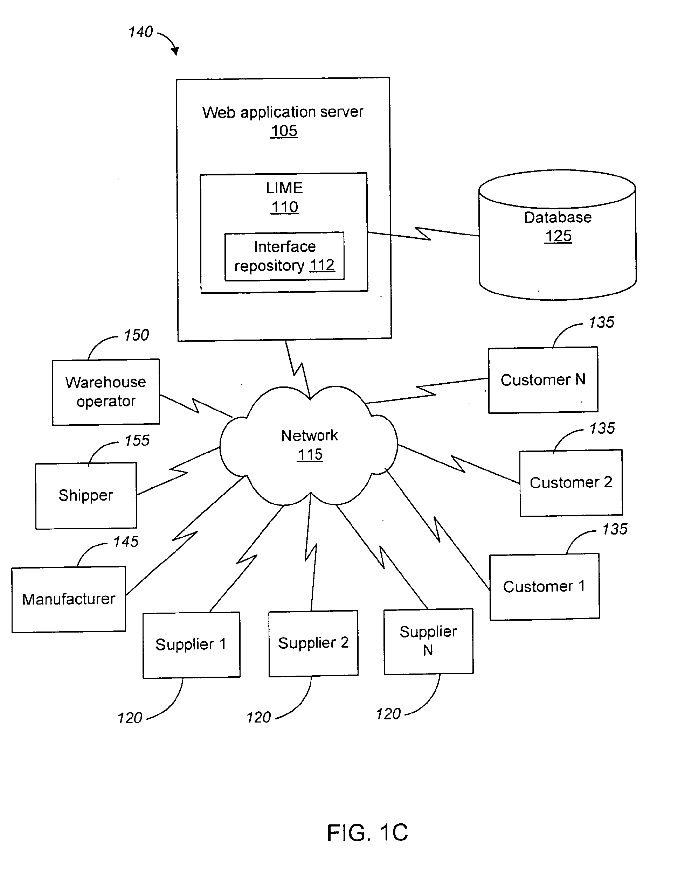

FIG. 1C is a simplified block diagram of an implementation of a third inventory management system (140). The inventory management system (140) includes a company that acts as a service broker of the web application server (105) and the inventory management engine (110) for entities, such as suppliers (120), customers (135), manufacturers (145), warehouse operators (150), and/or shippers (155). In this implementation, the inventory management system stores the data and handles the queries and transactions of all of the entities that are provided this service by the service broker. Each entity accessing the inventory management engine has an authorization code to access only certain (predetermined or predeterminable) data and only the supply chains in which that entity is involved. In this implementation, the entities advantageously avoid the initial capital costs of setting up an inventory management system as well as the ongoing costs of maintaining the software and hardware associated with such a system. However, the entities are required to pay fees to the service broker for the use of the inventory management system (140).

An inventory management system, such as those described above, can be implemented as a stand-alone or an integrated database system that relies internally on guids (Global Unique IDentifiers) but externally includes hierarchy tables, stock tables, serial number tables, and index tables, all of which are linked together, and all of which are described in more detail below. One example of such an inventory management system is SAP's LIME inventory management system. Although the following description is primarily directed to features of SAP's LIME inventory management system, the principles and methods described herein generally apply to many conventional inventory management systems. The hierarchy tables, stock tables, and/or serial number tables contain globally unique identifiers ("guids"). The index tables map business keys to the guids. The database uses two types of guids: index guids and node guids. The index guids refer to the index tables for location, handling unit ("HU"), and/or stock items. The node guids are used to identify a node in the hierarchy of location, handling unit and/or stock items.

As was described above, LIME can communicate with a variety of external systems, such as a SAP R/3 system, a non-SAP system (for example, a legacy system in a conventional inventory system), and a valuation system. The valuation system can be an accounting or finance system that performs functions related to the valuation of the stock quantity data, such as reporting or analyzing the value of the stock stored in one or more locations. The SAP system can be based on an SAP R/3 computing environment that includes a classical inventory management system (MM-IM), a warehouse management system (LE-WM), and a handling unit (HU) management system, and/or other computer systems. The external systems can include client computers that have the necessary software for communicating with the web application server over the network. Depending on what type of external system is used, different interfaces are selected from the interface repository (112). Some external systems can use XML (eXtensive Markup Language) through application integration to communicate with LIME. Other applications, such as the SAP system, can use XML via application integration, a CIF (Common Interchange Format) interface, function modules, BAPI (Business Application Programming Interface) and BAdls (Business Add-Ins). In some cases, LIME may also communicate with other function modules or engines in the same system through function modules and ABAP (Advanced Business Application Programming) OO (Object Oriented) methods.

The inventory management engine provides the stock quantity data in response to transaction requests from the external systems. For example, a valuation system may send a transaction request requesting to monitor specific stock quantity data so that the valuation system can further process the data such as analyzing the data and producing a report based on the analyzed data. In the retail industry, such a process can include producing a report of the quantity and value of the merchandise in one or more locations.

An exemplary implementation of the inventory management engine will now be described in further detail, in particular with regards to table structures, rules, and how to add or delete entries from tables that form the underlying data structure of the inventory management engine.

### Database table structures

An inventory management engine in accordance with one implementation of the invention will now be described by way of example.

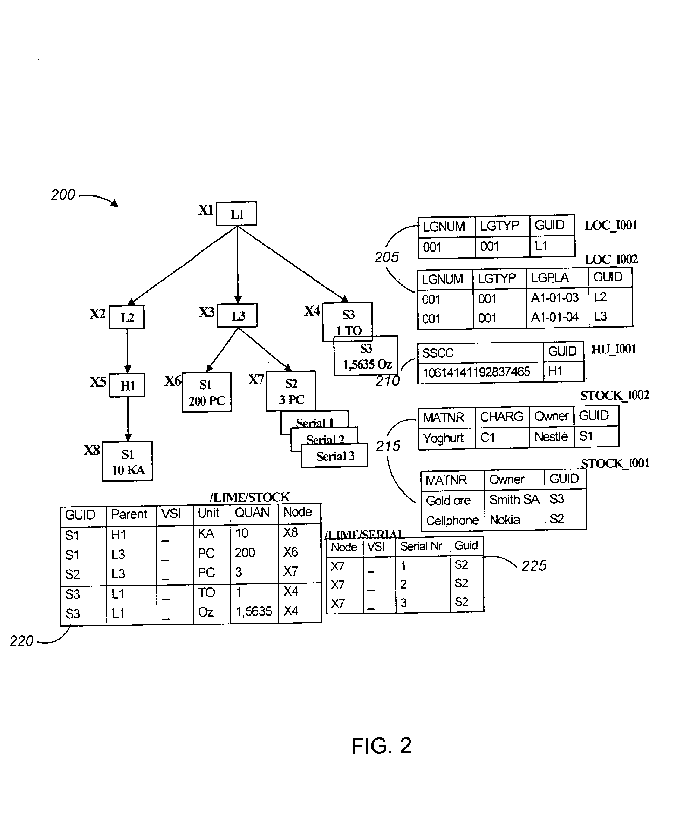

As can be seen in FIG. 2, the database model of LIME includes a hierarchical tree (200) that contains a set of guids (Global Unique IDentifiers) representing locations ("L1" through "L3"), one or more handling units ("H1"), stock units ("S1" through "S3") and/or serial numbers ("Serial1" through "Serial 3"). A location identifies the physical location of a stock unit and can, for example, be a warehouse, a warehouse gate, a delivery point, a shelf, a storage bin, and so on. A handling unit is an aggregation of stock units bundled together for distribution and logistics purposes. Examples of handling units include an individual item in a carton, combined items on pallets and skids, or items transferred in independently identified containers, such as ocean containers, rail cars or trucking trailers. A handling unit usually has or is associated with a (preferably worldwide) unique identifier SSCC (Serial Shipping Container Code). The quantity of a handling unit is always one. A stock unit is the smallest entity or item that can be handled and can be physically identified in a logistics process. A stock unit cannot be divided into components for logistic purposes. Single instances of a stock unit are not distinguished, but own the identical attributes and identifier. The stock unit is the carrier of the stock quantity. Examples of stock units include one or more of the following: material, trade item, SKU (T-shirt size L, style country, color green), batch (different production lots for paints, dyes, wallpapers, pharmaceutical products), quantity with a certain shelf-life expiration, serial number, split valuation new/used, manufacturer part number (separate stock units for different manufacturers), value only article is a stock unit using the currency unit as quantity unit, and so on.

Every node in the hierarchical tree (200) has a unique identifier marked with "X" and a number. The hierarchical tree (200) is represented as a table identified by "/LIME/TREE" (not shown) in the inventory management engine's database. The "/LIME/TREE" table will be discussed in further detail below. First, however, the other tables in the inventory management engine will be described. These other tables include index tables (205-215), a stock table (220) identified by "/LIME/STOCK," and a serial number table (225) identified by "/LIME/SERIAL."

There are three types of index tables in the inventory management engine; location index tables (205), handling unit index tables (210), and stock unit index tables (215). The index tables (205-215) are used to map real world numbers (that is, business keys) to guids that are used in the "/LIME/TREE, /LIME/STOCK," and "/LIME/SERIAL" tables. As can be seen in FIG. 2, there are two index tables for locations (205), which are marked "LOC_I001" and "LOC_I002." It should be noted that in a real situation, the tables of FIG. 2 are much larger. Here, the tables are only used to illustrate the general principles of the LIME database model. The location index table LOC_I001 has a first column LGNUM representing a warehouse number and a second column LGTYP representing a storage type. The location index table LOC_I002 additionally contains a third column LGPLA representing a bin location. As can be seen from the tables LOC_I001 and LOC_I002, there is also a unique guid L1 for the warehouse number and storage type, and unique guids L2 and L3 for each of the bin locations. Similarly the handling unit index table (210) identified by HU_I001 represents the SSCC with an assigned unique guid H1. The upper stock unit index tables (215), identified by STOCK_I002 has a guid S1 representing the material yogurt, batch C1, produced by Nestle. The lower one of the stock unit index tables (215), identified by STOCK_I001, has a guid S3 that represents a gold ore owned by Smith, and a guid S2 that represents a cellular telephone owned by Nokia.

All of the guids presented above are of a type referred to as index guids. Index guids refer to the index tables for location, handling unit, and/or stock item. Another type of guids that is used in the inventory management engine is node guids. Node guids are used to identify nodes in the hierarchy tree (200). If the same stock item (for example, the yogurt batch C1, represented by guid S1) is stored at two different places (for example, in handling unit H1 at location L2 and at location L3), each quantity of the stock item is assigned to a different node guid (X8 and X6, respectively). A stock quantity can be found in the table /LIME/STOCK (220) with the node guid as a unique key. A serial number is linked to a stock quantity through the node guid and is stored in the table /LIME/SERIAL (225).

A stock quantity that is represented in several units, also referred to as a Multiple Transaction Quantity (MTQ), has the same node guid. This can, for example, be seen in node X4 of the hierarchy tree (200), where the gold ore (identified by guid S3) is represented as 1 TO and 1.15635 Oz, respectively. The /LIME/STOCK table (220) also reflects this by having two entries for the gold ore. As can be seen from the /LIME/STOCK table (220), the yogurt (identified by guid S1) is represented in two units. However, this should not be confused with the MTQ, because in the case of the yogurt, it is only represented in one unit per location (KA at location X8 and PC at location X6). Consequently, when changes occur to the gold ore, both quantity entries for the gold ore in the stock table (220) need to be updated, but when changes occur to the yogurt in one of the locations, only the single quantity entry corresponding to that particular location needs to be updated. The described representation allows any one stock item to be represented in as many units as necessary, and it also allows any participant in the supply chain to access the stock item in any measurement unit, as long as the unit has been specified and added to the stock table /LIME/STOCK (220).

The table /LIME/STOCK (220) is the only table that contains stock quantities. A stock quantity refers to a specific node in the hierarchy tree (200). The exemplary /LIME/STOCK table (200) in FIG. 2 contains an index guid column with the guids obtained from the stock index tables (215), a parent column that identifies the parent node of the stock item, a VSI (Virtual Stock Indicator) column that indicates whether the stock item relates to a physical or virtual stock item, a unit column that indicates the unit of measure for the stock item, a quantity column that indicates the quantity of the stock item, and a node column that is a unique key for a stock quantity. For example, it can be seen that 10 cartons of the yogurt of batch C1 is stored in handling unit H1 (node X8) and that 200 yogurt containers is stored in location L3 (node X6). The unit of measure is a key field, which allows stock items represented in multiple unit of measurement quantities to have different entries in the /LIME/STOCK table (220). The VSI is included in the /LIME/STOCK table (220) since there can be a requirement to store the same physical stock quantity twice within LIME. For example, when a LIME is used in a warehouse, the VSI can be used to mark stock quantities as 'transport pending' in addition to the real physical quantities. Another requirement known from the oil and gas industry is to separate the so called "physical stock levels," which are derived from absolute measurements of a stock item quantity, from the "book stock levels," which are calculated by the system adding or subtracting delta or difference quantities to the stock item quantity table. With the VSI indicator, this separation can be achieved. Queries can then use the VSI indicator to retrieve stock item quantities for a defined VSI only. In one implementation, a stock quantity node without a VSI is the real quantity and a stock quantity node with a VSI is a virtual quantity needed for special purposes only. The VSI ensure that the same physical quantity is not counted twice when calculating the total physical stock.

The individual serial numbers are stored in a table (225)/LIME/SERIAL and can be linked to any type of stock item through the node guids without having to add the serial number field to the corresponding index table. The number of serial number entries is linked to the stock quantity in a specific unit of measure, for example, three serial numbers are linked to the node X7 that has a quantity of 3 in the stock index table (220) in FIG. 2. In an alternative implementation, serial numbers can be stored as stock quantity entries in table (220), but that might lead to a very large number of entries in the stock index table (220) and might be performance-critical for queries.

Table 1 below shows an exemplary hierarchy table /LIME/TREE corresponding to the hierarchy tree (200) shown in FIG. 2.

**Table 1**

| Guid | Idx | Type | Parent | Parent | Parent | Parent | Node |
|---|---|---|---|---|---|---|---|
| | | | | Idx | Type | Level | |
| S3 | 001 | S | L1 | 001 | L | 1 | X4 |
| S3 | 001 | S | ROOT | - | | 2 | X4 |
| S2 | 001 | S | L3 | 002 | L | 1 | X7 |
| S2 | 001 | S | L1 | 001 | L | 2 | X7 |
| S2 | 001 | S | ROOT | - | | 3 | X7 |
| S1 | 002 | S | L3 | 002 | L | 1 | X6 |
| S1 | 002 | S | L1 | 001 | L | 2 | X6 |
| S1 | 002 | S | ROOT | - | | 3 | X6 |
| S1 | 002 | S | H1 | 001 | H | 1 | X8 |
| S1 | 002 | S | L2 | 002 | L | 2 | X8 |
| S1 | 002 | S | L1 | 001 | L | 3 | X8 |
| S1 | 002 | S | ROOT | - | | 4 | X8 |
| H1 | 001 | H | L2 | 002 | L | 1 | X5 |
| H1 | 001 | H | L1 | 001 | L | 2 | X5 |
| H1 | 001 | H | ROOT | - | | 3 | X5 |
| L3 | 002 | L | L1 | 001 | L | 1 | X3 |
| L3 | 002 | L | ROOT | - | L | 2 | X3 |
| L2 | 002 | L | L1 | 001 | L | 1 | X2 |
| L2 | 002 | L | ROOT | - | | 2 | X2 |
| L1 | 001 | L | ROOT | - | | 1 | X1 |

Table 1 contains the relationship between a hierarchy node and its parents as well as all ancestors. A node at the highest hierarchy level has a default parent ROOT. The node guid is the exact identifier of a node and can be used to retrieve the complete path from a node to all the ancestors of the node. The column headings Idx and Type above refer to index table number and index table type, respectively. In this exemplary implementation of the LIME engine, the structure and the entries of the /LIME/TREE table have two primary goals. First, writing to the /LIME/TREE table should be fast. Therefore, there is only a small number of fields, and all entries (relationship node to parent and node to ancestors) can be inserted in a single database statement. Second, queries, in particular bottom-up queries, such as "Where can I find a stock quantity (node) within a location (ancestor)?" need to be efficient. This is particularly important for warehouse management applications, where it should be possible to obtain information with a minimum of DB accesses. With the above table it is possible, for example, to read the stock quantity node guids directly of any location (ancestor) in the hierarchy tree, read the stock quantity of any node in table /LIME/STOCK (220) through the node guid, and read the intermediate nodes (e.g. HU, sub-location) in /LIME/TREE through the node guid if the hierarchy information is requested by the query.

Furthermore, no additional entries are requested for MTQ (Multiple Transaction Quantities) of the same stock item, which will be discussed in further detail below. All quantities have the same guids (stock index guid, parent index guid, node guid) because they represent the same physical stock. The MTQ quantities are kept in table /LIME/STOCK (220) only (where the unit of measure is a key field).

### Table rules

The table structures described above allow the users to build virtually any kind of hierarchy, but the logical consistency needs to be checked against two kinds of rules, namely hierarchy rules (for example, a stock guid cannot have any children; a HU cannot be parent to a location, the highest node should always be a location, and so on) and business logic rules (for example, a bin location cannot be parent to a plant/storage location, and so on). A user can define specific business rules in customizing tables.

In one implementation of the inventory management engine, the hierarchy rules comprise at least one of the following rules:
1. Stock quantities can only be found at stock item level. There can be no stock quantities at the handling unit, location, or serial number levels.
2. A serial number is always linked to a stock item. The serial number cannot be linked directly to a handling unit or to a location.
3. A multi-level hierarchy of locations (nested locations) and handling units (nested handling units) is possible.
4. A multi-level hierarchy of stock items (containing the stock quantities) is not allowed (no nested stock items).
5. A stock item must have either a handling unit or a location as parent.
6. A stock item can be appended to each node of the hierarchy. It is thus possible to represent a location containing materials on handling units and materials without handling units.
7. A location can exist without a handling unit or without a stock item (empty location).
8. A handling unit can exist without a stock item (empty handling unit).
9. A stock item or a handling unit cannot exist without a location.
10. A location can only have another location as parent (no handling unit or stock item).
11. A node in the hierarchy tree can only have one parent.
12. A specific location or a specific handling unit can only exist once in the hierarchy tree. Consequently, it is not possible to have a recursive hierarchy.

A user may define additional hierarchical rules and business rules to further constrain the functionality of the inventory management engine to specific situations, if necessary.

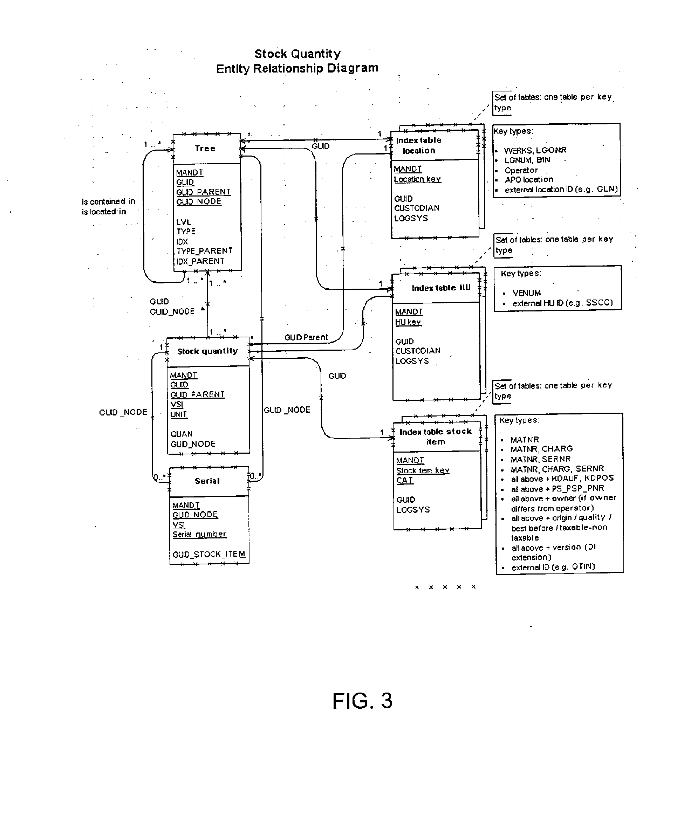

The database model and index tables described above are also shown in FIG. 3 in the form of a conventional entity relationship diagram for stock quantities.

### Creating and deleting entries in the inventory manaoement engine

To add new locations, handling units, or stock items, entries need to be created in the corresponding index table and in the hierarchy tree. In one implementation, stock items can be created "on the fly" with a goods movement, while handling units need to be created through calling a particular maintenance module. When creating a location, a handling unit, or a stock item, LIME ensures that the hierarchy rules described above are not violated. In one implementation this means that a parent node always needs to be specified for locations and/or handling units. For locations (but not for handling units or stock items), the parent node can be the ROOT node. Whenever entries in the index tables are updated, the LIME updates the tree table /LIME/TREE and performs the necessary checks.

Entries in the stock index tables can be created without specifying a parent node. The new stock table entries are integrated into the table representing the hierarchy tree when a goods movement process occurs. The integration takes place by calling a BADI (Business Add In) interface that enables the caller to decide if the stock should be created, or if the goods movement should be canceled with an error. Materials with batches or goods movements with new stock categories are examples of were stock entries can be created "on the fly."

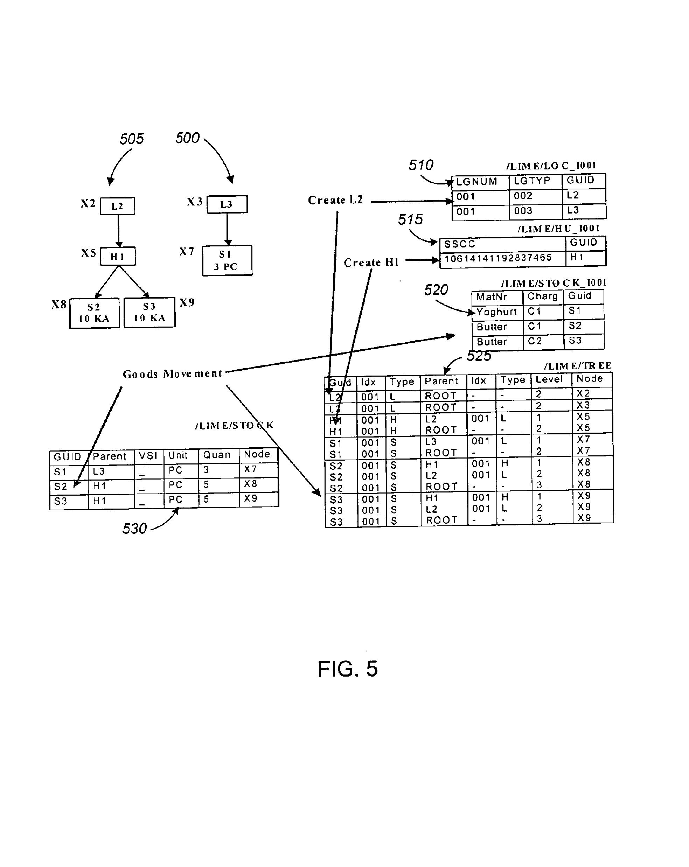

FIG. 5 shows how the index tables and their entries are changed when creating the location L2 and the handling unit H1. In addition to creating the location L2 and the handling unit H1, two batches of the material 'Butter' are also created in a goods movement operation. Originally, only the rightmost hierarchy tree (500) exists and the corresponding entries in tables 510, 520, 525 and 530, that is, entries with guids L3 and S1. When a user wishes to create a new location, the location index table (510) is updated with the new location information and a new guid L2 is assigned. The hierarchy tree table (525) is also updated with a new entry that corresponds to L2 and only has ROOT as a parent, and a new node guid X2 is assigned to the new location L2.

Next, a handling unit is created in location L2 by creating an entry in a handling unit index table (515) and updating the hierarchy tree table (525) with the corresponding handling unit entry, as well as adding a new node guid X5 to the handling unit. Finally a set of two stock items "Butter" are added to the handling unit by updating the stock index table (520) with two new entries. The new guids S2 and S3 are generated for the two new "Butter" items, and the corresponding entries are created in the stock item table (530) and in the hierarchy tree (525) table. The resulting hierarchy tree (505) is shown in the left hand side of FIG. 5. How the actual writing to the various tables is carried out will be discussed in further detail below.

In this exemplary implementation of the invention, it is only possible to delete locations or handling units if the locations or handling units are on a leaf level of the hierarchy tree, that is, if the location or handling unit does not have any children. Entries from the stock index tables can be deleted only if the corresponding entries to be deleted from the table /LIME/STOCK has a quantity of zero.

### Writing and reading data in the inventory management engine

The data table model used in LIME has been designed to allow fast queries for complex supply chain networks and fast writing of data when stock movement documents are posted. Entries of the table /LIME/STOCK can be identified using either the guid and parent guid combination, or using the node guid. For goods movements, the guid and parent guid combination is used to avoid an additional select operation on the /LIME/TREE table. Queries use the node guid when the stock item, but not the direct parent, is specified.

Movements of products for owners and total stock levels result in updates of only one table (the /LIME/STOCK table). As long as the hierarchy is not changed, table /LIME/TREE does not change and does not need to be updated. Movement of the handling unit to a different location, on the other hand, results in a change in table /LIME/TREE but table /LIME/STOCK remains unchanged. Similarly, a stock change can be posted to the handling unit, which in return leads to an update of the relevant entry in table /LIME/STOCK only.

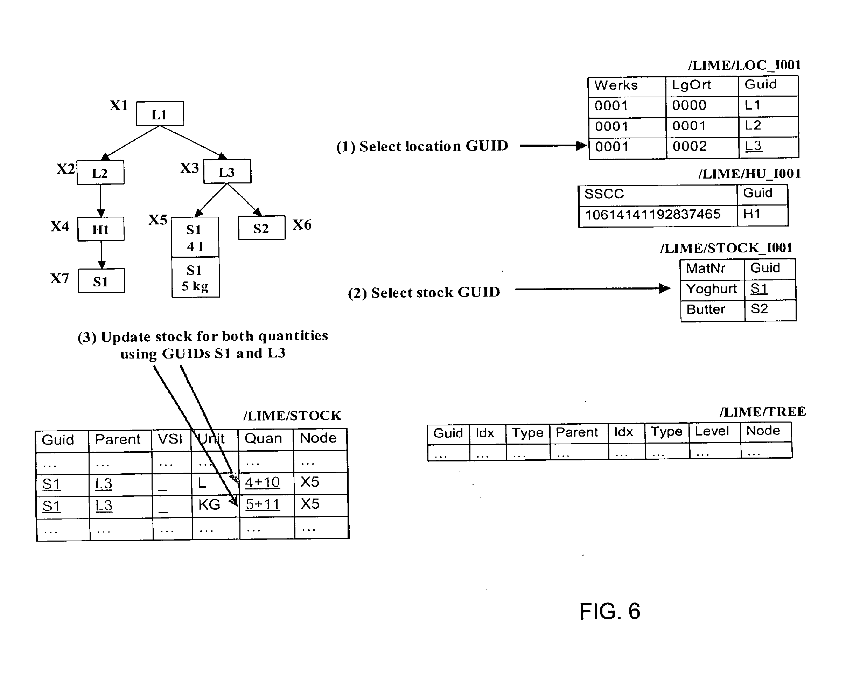

FIG. 6 shows how a goods movement is reflected in LIME. In the example it is assumed that stock S1 (yogurt), in location L3 (warehouse number 0001 and storage location 0002) is increased by 10 liters and 11 kilograms, respectively (in the scenario, it is assumed that yogurt is measured both in the units liters and kilograms). First, the location guid (L3) is selected in the location index table /LIME/LOC_I001. Second the stock guid (S1) for yogurt is selected in the stock index table /LIME/STOCK_I001. Finally the stock corresponding to guids S1 and L3 is updated in the stock table /LIME/STOCK.

With the hierarchy tree table concept, most queries can be carried out using a single select statement (joined with the relevant index table) on the table /LIME/TREE. A distinction can be made between two general types of queries: top-down queries, where the basic query is "Show me what I contain," and bottom-up queries, where the basic query is "Show me where I am in the world." Depending on the business scenario and setup of the supply chain, optimized queries can be developed using this basic conceptual approach.

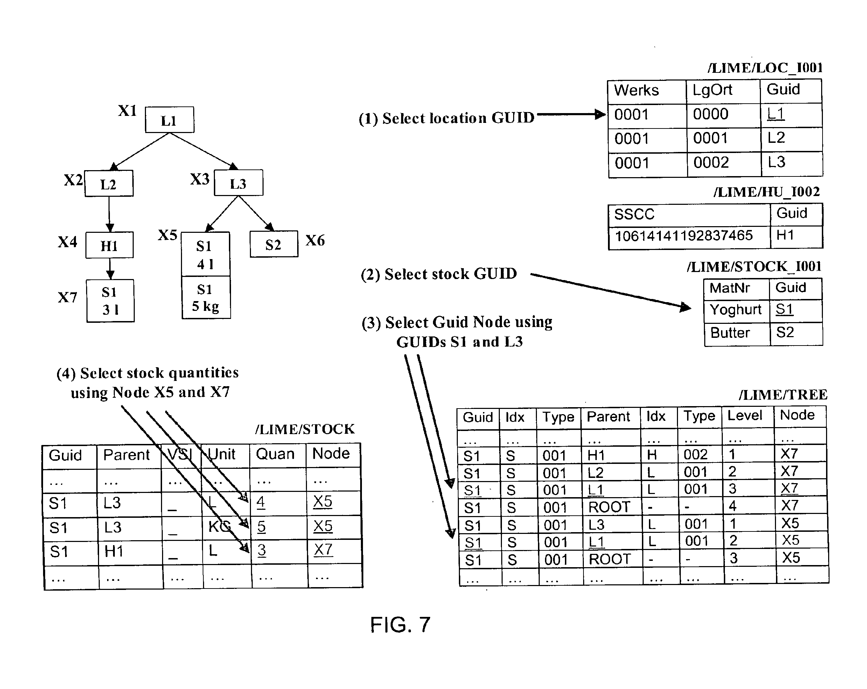

FIG. 7 shows how LIME selects the stock represented by S1 in location L1. First, the location guid (L1) is selected in the location index table /LIME/LOC_I001. Second the stock guid S1 for yogurt is selected in the stock index table /LIME/STOCK_I001. Third, the nodes in the hierarchy table /LIME/TREE are identified using the guids S1 and L1. Since the table /LIME/TREE holds all parents of a stock item, it is possible to find all occurrences of a stock item with only one select operation on the table /LIME/TREE. It is not necessary to do one select operation for each level against the tree table. From the hierarchy table /LIME/TREE, it can be seen that the nodes are X5 and X7. Finally, the stock quantities corresponding to nodes X5 and X7 are retrieved from the "Quantities" column in the stock table /LIME/STOCK.

### Functional overview

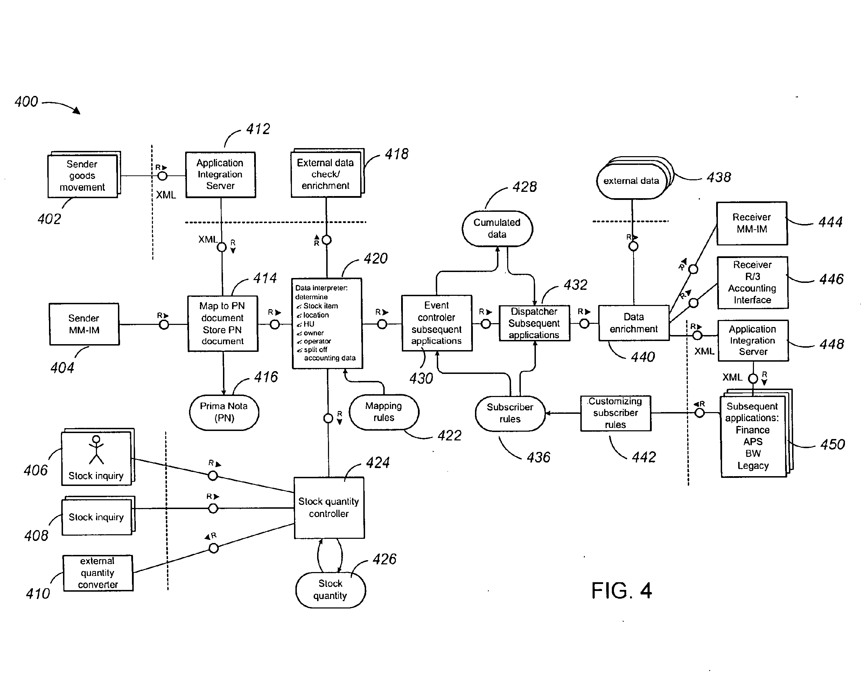

A more detailed process for inventory management in accordance with one implementation of the invention will now be described with reference to the schematic block diagram (400) in FIG. 4. All the blocks outside the dashed lines (that is, blocks 402-412, 418, 438, and 444-450) represent external components, while all the blocks inside the dashed lines (that is, blocks 414-416, 420-436, and 440-442) represent the inventory management engine.

LIME receives a message containing stock movement data or physical inventory data from a calling application (402, 404). The message can be an XML document that is forwarded to LIME via an Application Integration Server (412) or can be a function module call from a mySAP application (404). The incoming document is kept by LIME during the whole process.

LIME then generates (414) an update log (prima nota) (416) if necessary. The prima nota holds all input data that is required for recovery in the event of a system failure or auditing. After generating the prima nota (416), LIME extracts (420) its own data from the incoming document, such as location, handling unit, stock quantities, and so on and maps the extracted data to the LIME internal structures described above according to a set of mapping rules (422). An external data check or data enrichment (418) is also carried out, if necessary, and a stock quantity controller (424) updates a stock quantity database (426).

External applications (406-410) can submit stock inquiries to LIME through the stock quantity controller (424). Each application that may require information about stock movements or physical inventory documents subscribes to LIME, and defines the dispatching rules for the documents. Users of the LIME application can include rules based on various conditions, such as what criteria are relevant for the subscribing application (for example, finance applications need to be informed of changes in stock ownership), how often the subscribing application will receive documents from LIME (for example, once per day), and whether the documents will be cumulated by LIME before dispatching and what the aggregation rules are.

An event controller (430) then checks the subscriber rules (436) for the various applications and forwards the document (possibly in a cumulated format) to the receiving applications using a dispatcher (432). The forwarding may include adding cumulated data (428) and obtaining other external data (438) for enrichment (440) with the LIME data before the LIME data is passed on to the receiving applications. The receiving applications may include an MM-IM system (444), a R/3 accounting interface (446), and an Application integration server (448). The application integration server (448) may call various subsequent applications (450), such as finance applications, legacy applications, and so on. These applications can in turn customize (442) the subscriber rules (436) used by the event controller to dynamically change the behavior of the event controller (430) and dispatcher (432) before the next event takes place.

### MTQ usage scenarios

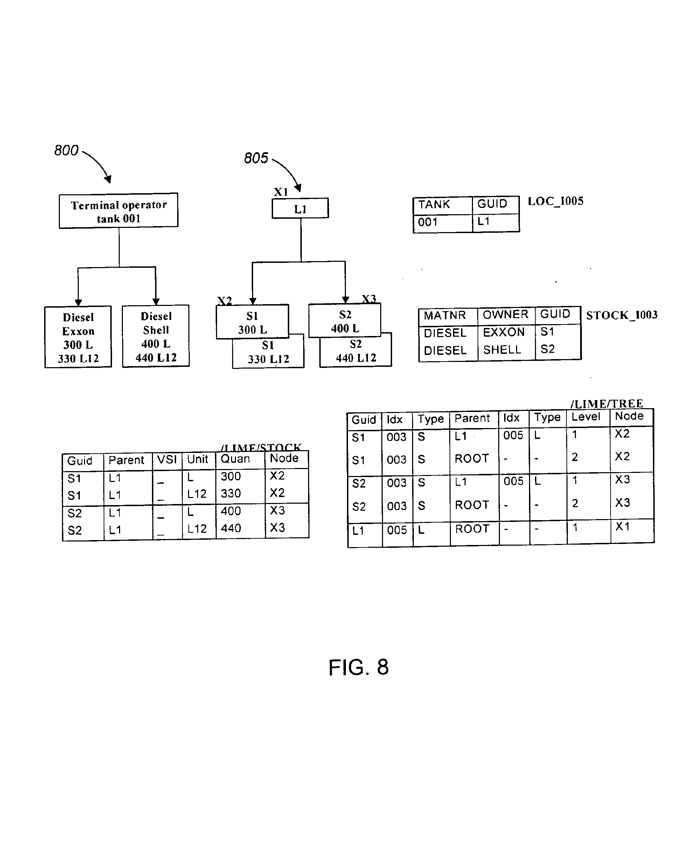

FIG. 8 shows an example of an oil terminal tank containing diesel from two different owners (Exxon and Shell). The diesel stock is kept in several units of measure (liter, denoted by L, and liter at 12°C, denoted by L12). The hierarchy tree (800) in the left hand side of FIG. 8 shows the real-world view, and the hierarchy tree (805) in the right hand side of FIG. 8 shows the internal representation in LIME.

The oil terminal tank is represented by location guid L1, as shown in the location index table LOC_I005. The owner is a key field of index table STOCK_I003, therefore the same material has a different guid for each owner, that is, S1 (for Exxon) and S2 (for Shell).

In the stock table /LIME/STOCK, each owner's oil is represented by two entries, one for each unit of measure and each having an associated quantity. The unit of measure is a key field in the stock table /LIME/STOCK, so that all MTQ quantities can be managed with the same guid and parent guid combination. Physically the MTQ quantities belong to the same stock item.

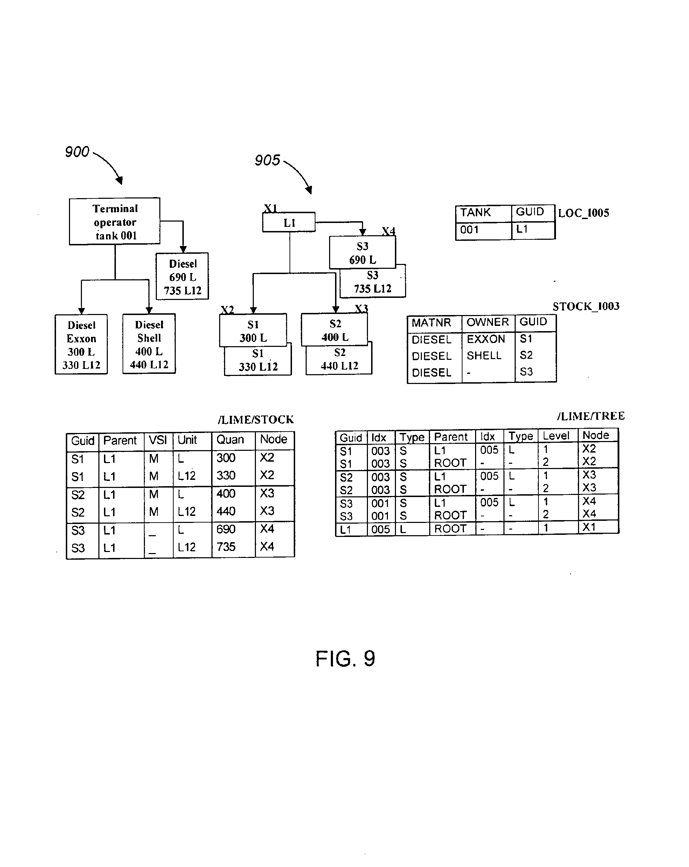

FIG. 9 shows an example, similar to the one shown above in FIG. 8, of an oil terminal tank containing diesel from two different owners (Exxon and Shell). Also here, the diesel stock is kept in liters (L) and liters at 12°C (L12), respectively. The hierarchy tree (900) in the left hand side of FIG. 9 shows the real-world view, and the hierarchy tree (905) in the right hand side of FIG. 9 shows the internal representation in the LIME. The example in FIG. 9 is different from example in FIG. 8 because of the addition of node X4 to the hierarchy tree (905) in the LIME. The addition of node X4 allows inventory difference handling in tank management, as will now be explained.

Whenever a goods movement occurs for a specific owner, one or both of nodes X2 (Diesel Exxon) and X3 (Diesel Shell) is/are updated, depending on for which owner the goods movement took place. The total tank stock is regularly measured and an inventory report (in absolute quantities) is posted to node X4 (that is, the total amount of diesel in the tank, which is a non owner-specific measurement).

The virtual stock indicator (VSI) indicates that the same physical quantity is stored twice in LIME. Stock item quantities with a VSI value should not be considered when calculating the total physical stock represented in LIME. Differences between the owner-specific stock (X2 and X3) and the total stock can now be analyzed by comparing the goods movement postings to X2 - X3 and the inventory reports to X4.

### Ownership change scenario

A warehouse operator may provide storage space to more than one company. The companies own the stock in the warehouse and the warehouse operator merely provides logistics support. Nonetheless, the warehouse operator must be able to identify the owner of the stock within the warehouse in the event of, for example, a change in ownership in the stock. The warehouse operator also must have the ability to separate its function as a custodian of the inventory from the owner's function as the legal owner of the inventory. Because of system circumstances, such as a change in stock ownership, the inventory management engine is operated to be independent of the legal structure of a company by treating as separate the custodian or stock operator (i.e., warehouse operator) and the stock owner. In this manner, changes in the company structure, such as merging and outsourcing, are easily handled within the inventory management system. Other examples of events that cause a change in stock ownership without a change in stock location include, the outsourcing of a warehouse, a change of a trading partner in a supply chain, management of the book stock level for each owner for a commingled location, or other events. These events are contemplated by the inventory management system and the owner can be easily changed within the inventory management system by merely changing one field of the stock index table.

A change in ownership also will be important in other applications, such as finance and accounting. For example, if a first company sells stock items to a second company, both companies will want to adjust their finance and accounting records to include the impact that the transfer will incur. Thus, the financial effects of the transfer should be readily ascertained from the inventory management system by using, for example, interfaces to external applications that provide the necessary data to run those external applications.

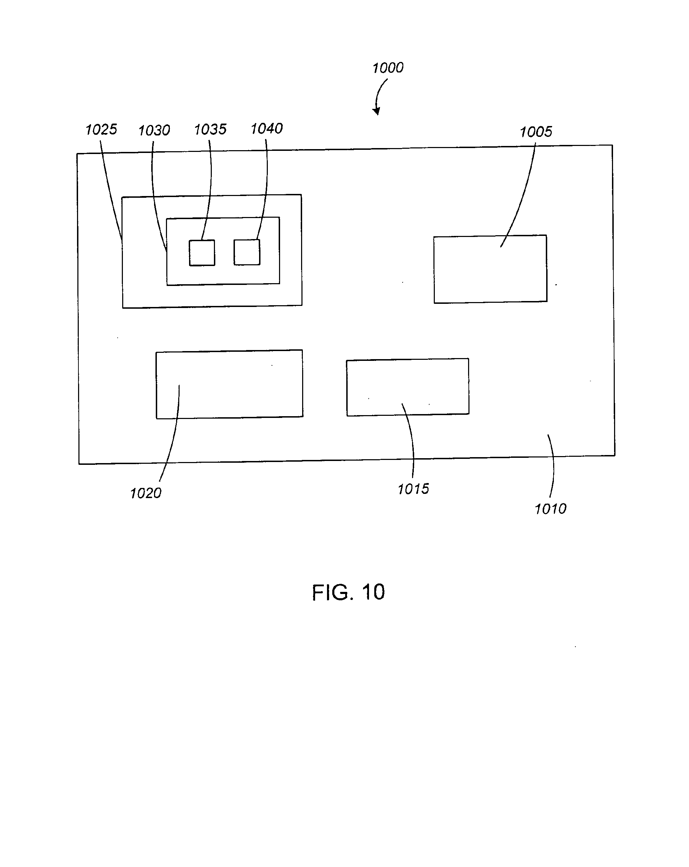

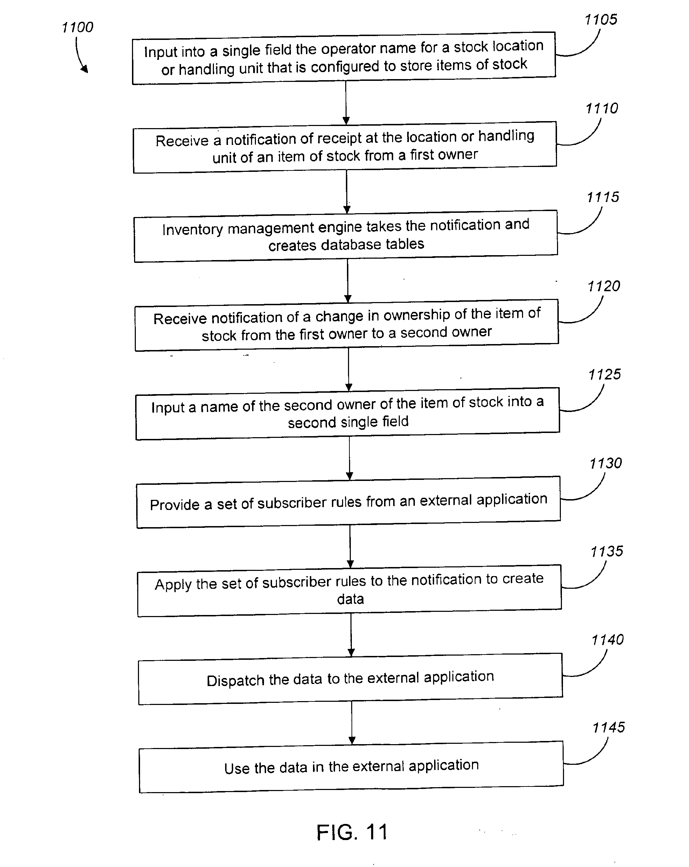

FIG. 10 is a diagram of the layout of a location (1000), such as a warehouse, in which the item of stock is placed and is described by the process of FIG. 11. FIG. 11 is a flow chart illustrating, at a high level, a basic application of the inventory management system and inventory management engine to a situation in which an operator of, for example, the location (1000), is a custodian of stock items for other companies. A first owner places an item of stock in the operator's warehouse and at some later time transfers ownership of the item of stock to a second owner. The warehouse may be part of a supply chain and the operator of the warehouse accesses an inventory management system that is operated by the ultimate manufacturer of the items in the supply chain, as described above.

In this example, the location (1000) includes five storage locations (1005, 1010, 1015, 1020, and 1025). Some storage locations (1005, 1015, 1020, and 1025) may be, for example, refrigerated containers. Other storage locations (1010) may be, for example, an area within another location (1000) that is dedicated to a particular category of stock items or handling units. A storage location (1025) may contain a handling unit (1030) that is implemented in the form of a pallet. The warehouse operator stores two stock items (1035 and 1040) on that pallet. In this example, one stock item (1035) is initially owned by a first owner, transported for the owner to the location (1000), and stored within the storage location (1025) on the handling unit (1030). At a subsequent time, a second owner takes ownership of the stock item (1035) although the stock item's location does not immediately change. The warehouse operator notes this change in ownership and uses the inventory management engine to update an inventory management system and transfer data to external applications.

In a process (1100) of FIG. 11, the operator has storage locations and handling units within the warehouse. At some point in time, the operator must enter a location business key into an index table for the warehouse location (1000); location business keys into index tables for the storage locations (1005, 1010, 1015, 1020, and 1025); and a handling unit business key into an index table for the handling unit (1030). Once these business keys are entered into the inventory management engine, guids will be generated that are linked to the business keys. The warehouse operator also must enter a business key into the location index that identifies the operator (step 1105). The business key may, for example, link the location (1000) to information about the operator.

As described above with respect to FIG. 11, the first owner sends a stock item (1035) in a supply chain to the warehouse. When the stock item arrives, it may have accompanying paperwork and/or identifier (such as barcodes, transponder information, etc) that notifies the warehouse operator of the stock item and identifies the owner of the stock item, a material number or name associated with the stock item, a batch number associated with the stock item, etc. (step 1110). The document can be in the form of an XML document such that the data is entered directly into the inventory management engine. The inventory management engine then creates the tables described above using the information included in the XML document (step 1115). The inventory management engine can also specify the location of the stock items within the warehouse.

A second owner of the stock item (1035) in the supply chain later takes ownership of the stock item, although the stock item remains within the warehouse. For example, the first owner and the second owner may have an agreement that after the stock item has been in the warehouse for two days, ownership passes to the second owner. Thus, the operator of the warehouse will receive notification in some form (e.g., a facsimile, an XML document, an automated message, etc.) that the ownership of the stock item (1035) has been changed from the first owner to the second owner (step 1120). Because of the structure of the database and inventory management engine, the warehouse operator needs only to change one field in a stock item index table, namely, the owner name (step 1125). For example, a location guid, such as L1 in FIG. 2, can by linked to a warehouse operator. As such, there will be a distinct separation of the warehouse operator who is the custodian of the stock, linked in the location index table (e.g., LOC_I001 (205) in FIG. 2), and the actual legal owner of the stock, linked in the stock index table (e.g., /LIME/STOCK (220) in FIG. 2). All of the attributes associated with the stock item will remain the same and be linked through the guids to the second owner.

The first owner and the second owner may need to update their financial records and accounting records to reflect the transfer of ownership. This is accomplished using applications that are external to the inventory management system. As was described above, to provide the needed data to the external applications, the external applications provide a set of subscriber rules to the inventory management system (step 1130). The subscriber rules, for example, can request that daily batches of information, rather than a continuous stream of information, be provided to the external applications. The inventory management system applies the subscriber rules and creates the data for the external applications (step 1135). Using the subscriber rules, the inventory management system dispatches the data to the external application (step 1140). The external applications use the data to, for example, revise the financial valuations (step 1145).

Based on the general characteristics of the tables, inventory management system, and inventory management engine described above, following are examples of the implementation and use of the system and engine with emphasis on the tables.

The invention can be implemented in digital electronic circuitry, and/or in computer hardware, firmware, software, or in combinations of them. The invention can be implemented as a computer program product, and/or as a computer program (product) preferably tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, and/or other unit suitable for use in a computing environment. A computer program can be deployed to be executed on one computer and/or on multiple computers at one site and/or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

The invention can be implemented in a computing system that includes a backend component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

A number of embodiments of the invention have been described. Nevertheless, it will be understood that various modifications may be made without departing from the spirit and scope of the invention as defined in the claims. For example, the stock quantity data can be distributed among one or more databases. Accordingly, other embodiments are within the scope of the following claims.

## Claims

1. A method for managing data items in an inventory management system, comprising:
maintaining a set of data items representing stock items in an inventory, wherein at least one stock item is described by two or more values, each value being expressed in a different unit of measurement;
receiving a change request for a change of one of the values for the stock item;
determining, based on the change request and a defined relationship between the different units of measurement, change quantities for the other values for the stock item; and
updating the two or more values for the stock item based on the change request and the determined change quantities.

2. The method of claim 1, further comprising defining a relationship between the different units of measurement based on a user input.

3. The method of one of the preceding claims, wherein the change request can be performed by any participating party in a supply chain.

4. The method of one of the preceding claims, wherein the change request comprises one of: an add operation for increasing values representing a stock item, and a delete operation for reducing values representing a stock item.

5. The method of one of the preceding claims, wherein the change request expressed in the two or more units of measurement.

6. The method of one of the preceding claims, further comprising querying a data item for one or more values of a particular unit for the stock item that is described in the two or more different units of measurement.

7. The method of one of the preceding claims, wherein a first data item represents a first stock portion owned by a first user and a second data item represents a second stock portion owned by a second user, the first and second stock portions being commingled in a same location.

8. A method, in particular according to the preceding claims, of updating information relating to an item of stock in a supply chain that resides in a storage facility of a custodian of the stock when the ownership of the item of stock passes from a first owner to a second owner, the method comprising:
providing a first data structure representing the custodian of the item of stock;
providing a second separate data structure representing the owner of the item of stock; and
passing the ownership of the item of stock from the first owner to the second owner, wherein passing the ownership comprises changing the name from the first owner to the second owner in a field in the second data structure.

9. The method of claim 8, further comprising inputting the name of the custodian of the item of stock in a single field in the first data structure.

10. The method of one of the preceding claims 8 to 9, further comprising inputting the name of the first owner of the item of stock in a single field in the second data structure.

11. The method of claim 10, wherein inputting the name of the first owner of the item of stock comprises retrieving the name of the first owner from an XML document.

12. The method of one of the preceding claims 8 to 11, wherein passing the ownership comprises receiving a notification that specifies a change in ownership of the item of stock from the first owner to the second owner.

13. The method of claim 12, wherein receiving a notification that specifies a change in ownership comprises receiving an XML document.

14. The method of one of the preceding claims 8 to 13, further comprising providing a set of subscriber rules from an external application.

15. The method of claim 14, further comprising applying the set of subscriber rules to a notification of a change in ownership of the stock item to create data.

16. The method of one of the preceding claims 8 to 15, further comprising dispatching the data to the external application.

17. The method of one of the preceding claims 14 to 16, wherein providing a set of subscriber rules comprises providing a set of subscriber rules of an accounting application.

18. The method of one of the preceding claim 14 to 17, wherein providing a set of subscriber rules comprises providing a set of subscriber rules of a finance application.

19. The method of claim one of the preceding 14 to 18, wherein providing a set of subscriber rules comprises providing criteria that is relevant to the external application.

20. A method, in particular according to the preceding claims, for managing data items in an inventory management system, comprising:
receiving a request to add a data item to the inventory management system, the data item having an associated set of attributes to be represented in the inventory management system;
determining whether the inventory management system includes a structure in which the data item and the set of attributes associated with the data item can be represented;
if no structure exists in which the data item and the set of attributes associated with the data item can be represented, automatically defining a new structure in which the data item and the set of attributes associated with the data item can be represented; and
inserting the data item and the set of attributes associated with the data item into the defined new structure.

21. The method of claim 20, wherein the data item represents: a stock item, a handling unit, or a location.

22. The method of claim 20 or 21, wherein the inventory management system includes a hierarchy representing relations between a plurality of data items, each data item being represented by a unique identifier in the hierarchy, the method further comprising:
automatically defining a unique identifier for the inserted data item and the associated set of attributes;
determining a location within the hierarchy for the inserted data item, based on one or more of the attributes in the set of attributes associated with the data item; and
adding the unique identifier to the hierarchy at the determined location.

23. The method of one of the preceding claims 20 to 22, wherein the determining and inserting steps are performed in accordance with a set of rules associated with the hierarchy.

24. The method of one of the preceding claims 20 to 23, wherein receiving a request to add a data item comprises receiving an XML document defining the data item and the associated set of attributes.

25. The method of one of the preceding claims 20 to 24, further comprising updating one or more external system in response to the adding of the data item and the set of attributes associated with the data item to the defined new structure.

26. The method of one of the preceding claims 20 to 25, wherein the structure comprises one or more of: an index table, a stock table, a serial number table, and a tree hierarchy table.

27. The method of claim 26, wherein the data item is represented in a unique index table that includes a global unique identifier field and one or more attribute fields, each attribute field representing an attribute associated with the data item.

28. The method of claim 27, further comprising updating the tree hierarchy table every time a unique identifier is created.

29. The method of one of the preceding claims 26 to 28, wherein the index table is: a stock index table, a location index table, or a handling unit index table.

30. A computer program product comprising computer instructions that when loaded and run on a computer performs a method according to one of the preceding claims.

31. A computer readable storage medium comprising a computer program tored thereon that when loaded and run on a computer performs a method ccording to one of the preceding claims 1 to 29.

32. A computer system for managing data items in an inventory management system, comprising:
means for maintaining a set of data items representing stock items in an inventory, wherein at least one stock item is described by two or more values, each value being expressed in a different unit of measurement;
means for receiving a change request for a change of one of the values for the stock item;
means for determining, based on the change request and a defined relationship between the different units of measurement, change quantities for the other values for the stock item; and
means for updating the two or more values for the stock item based on the change request and the determined change quantities.

33. A computer system, in particular according to claim 32, of updating information relating to an item of stock in a supply chain that resides in a storage facility of a custodian of the stock when the ownership of the item of stock passes from a first owner to a second owner, the method comprising:
means for providing a first data structure representing the custodian of the item of stock;
means for providing a second separate data structure representing the owner of the item of stock; and
means for passing the ownership of the item of stock from the first owner to the second owner, wherein passing the ownership comprises changing the name from the first owner to the second owner in a field in the second data structure.

34. A computer system, in particular according to claim 32 or 33, for managing data items in an inventory management system, comprising:
means for receiving a request to add a data item to the inventory management system, the data item having an associated set of attributes to be represented in the inventory management system;
means for determining whether the inventory management system includes a structure in which the data item and the set of attributes associated with the data item can be represented;
if no structure exists in which the data item and the set of attributes associated with the data item can be represented, means for automatically defining a new structure in which the data item and the set of attributes associated with the data item can be represented; and
means for inserting the data item and the set of attributes associated with the data item into the defined new structure.
